# EUROPÄISCHE PATENTSCHRIFT

(11) **EP 1 158 224 B1**
(45) Veröffentlichungstag und Bekanntmachung des Hinweises auf die Patenterteilung: **27.07.2005**
(21) Anmeldenummer: 01110895.8
(22) Anmeldetag: 05.05.2001
(51) Int. Cl.: F16J 15/08, F16J 15/06

(54) **Flachdichtung**
Flat gasket
Joint plat d'étanchéité

(30) Priorität: 23.05.2000 DE 10025400; 20.09.2000 DE 10046505
(43) Veröffentlichungstag der Anmeldung: 28.11.2001
(73) Patentinhaber: ElringKlinger AG, 72581 Dettingen (DE)
(72) Erfinder: Hegmann, Oliver, 65462 Ginsheim (DE)
(74) Vertreter: HOEGER, STELLRECHT & PARTNER Patentanwälte

(56) Entgegenhaltungen:
- EP-A- 0 646 714
- EP-A- 0 872 671
- EP-A- 0 992 718
- DE-A- 19 534 962

## Beschreibung

Die Erfindung betrifft eine Flachdichtung zur Abdichtung eines Dichtspalts zwischen gegen die Flachdichtung anpreßbaren Dichtflächen von Maschinenbauteilen, wobei die Flachdichtung eine von einer Metallblechlage gebildete Dichtungsplatte aufweist.

Bei derartigen Flachdichtungen versieht man die die beiden Hauptoberflächen der Dichtungsplatte bildende Metallblechlage üblicherweise dort mit Sicken, wo an bezüglich der Abdichtfunktion besonders kritischen Stellen eine erhöhte Dichtflächenpressung zwischen der Flachdichtung und den Dichtflächen der gegeneinander abzudichtenden Maschinenbauteile erzeugt werden soll. Derartige Sicken haben sich jedoch dort als nicht ausreichend erwiesen, wo die Maschinenbauteil-Dichtflächen, zwischen denen die Flachdichtung eingespannt wird, uneben sind, beispielsweise Stufen aufweisen, wie dies dann der Fall ist, wenn es sich bei einer gegen die Flachdichtung anliegenden Maschinenbauteil-Dichtfläche um mehrere, beispielsweise zwei Dichtflächenbereiche handelt, welche von mehreren gesonderten Maschinenbauteilen gebildet werden, die im Bereich dieser Stufe gegeneinander anliegen, d. h. eine Stoßstelle bilden - an solchen Stoßstellen können Fertigungs- und/oder Montagetoleranzen zu einer Stufe in der besagten Dichtfläche führen.

Typisch für diese Problematik sind Flachdichtungen in Form von Zylinderkopfdichtungen für Hubkolben-Verbrennungsmotoren mit einem insbesondere mehrteiligen Kettenkasten, welcher gleichfalls durch die Zylinderkopfdichtung abgedichtet werden soll, da in diesem Fall die beiden Maschinenbauteil-Dichtflächen, zwischen denen die Zylinderkopfdichtung eingespannt wird, gebildet werden einerseits vom Zylinderkopf und einem Kettenkasten-Oberteil und andererseits vom Motorblock bzw. Kurbelgehäuse und einem Kettenkasten-Unterteil - bei einer solchen Motorkonstruktion ergibt sich sowohl eine Stoßstelle zwischen dem Zylinderkopf und dem Kettenkasten-Oberteil, als auch eine Stoßstelle zwischen dem Motorblock und dem Kettenkasten-Unterteil. Der obere Teil des Kettenkastens kann aber auch vom Zylinderkopf gebildet werden, so daß es kein gesondertes Kettenkasten-Oberteil gibt, oder kann der unter Teil des Kettenkastens vom Motorblock gebildet werden, so daß es kein gesondertes Kettenkasten-Unterteil gibt; eine Stoßstelle ergibt sich dann aber immer noch in der unteren bzw. oberen der Dichtflächen, zwischen denen die Zylinderkopfdichtung eingespannt wird.

Aus dem Stand der Technik ergeben sich bereits mehrere Lösungen für das vorstehend geschilderte, durch Stoßstellen hervorgerufene Problem:

So offenbart die EP-A-0 059 777 eine einlagige, metallische Flachdichtung für ein mehrteiliges Getriebegehäuse mit einem Gehäuseoberteil und einem Gehäuseunterteil, zwischen denen die Flachdichtung eingespannt wird. Das Gehäuseoberteil ist seinerseits mehrteilig, so daß sich in der gegen die Flachdichtung anzupressenden Dichtfläche des Gehäuseoberteils Stoßstellen ergeben, welche in einem Bereich der Dichtfläche zu Stufen führen können. Die Flachdichtung besitzt deshalb eine langgestreckte, schlitzförmige Öffnung, welche sich bei eingebauter Dichtung über alle diese Stoßstellen erstreckt und in die ein strangförmiges, elastomeres Dichtelement eingelegt ist, das beidseits über die beiden Hauptoberflächen der Flachdichtung übersteht und als vorgefertigter Einsatz hergestellt wird.

Dem Stand der Technik sind ferner Lösungen des vorstehend beschriebenen Problems für Zylinderkopfdichtungen zu entnehmen, welche auch der Abdichtung eines Kettenkastens dienen:

So zeigt die DE-C-43 37 758 eine mehrlagige metallische Zylinderkopfdichtung, in die vorgefertigte elastomere Dichtelemente eingesetzt sind, und zwar an Stellen der Zylinderkopfdichtung, welche jeweils über einer Stoßstelle zwischen Motorblock und Kettenkasten liegen. Bei einer ersten, vierlagigen Ausführungsform dieser Zylinderkopfdichtung hat jedes der Dichtelemente einen ungefähr T-förmigen Querschnitt mit einem Abdichtteil und einem gegenüber diesem verdickten Kopfteil, welcher der Festlegung des Dichtelements in der Zylinderkopfdichtung dient; zu diesem Zweck haben die beiden Mittellagen für jedes Dichtelement übereinanderliegende rechteckige, fensterartige Öffnungen zur Aufnahme des Kopfteils des betreffenden Dichtelements, während die eine Deck- oder Außenlage im Bereich der Dichtelemente geschlossen ist und die andere Decklage für jedes Dichtelement eine rechteckige fensterartige Öffnung besitzt, durch die der Abdichtteil des Dichtelements hindurchgreift und die kleiner ist als die Öffnungen der Mittellagen und der Querschnitt des Kopfteils. Schon bei ungepreßter Zylinderkopfdichtung ragen die Abdichtteile der Dichtelemente über die mit den Öffnungen versehene Decklage beträchtlich hinaus. Bei einer zweiten Ausführungsform dieser bekannten Zylinderkopfdichtung, welche dreilagig ist, haben alle drei Lagen an den Stellen der Dichtelemente übereinanderliegende rechteckige, fensterartige Öffnungen, wobei die Öffnungen der Mittellage etwas größer sind als die untereinander gleich großen Öffnungen der Decklagen, so daß sich die Dichtelemente mit im Durchmesser vergrößerten mittleren Bereichen zwischen den Decklagen gegen Verschiebungen gesichert halten lassen. Auch bei dieser zweiten Ausführungsform stehen die Dichtelemente schon bei ungepreßter Zylinderkopfdichtung über die eine Hauptoberfläche der Dichtung hinaus.

Aus der EP-B-0 701 051 geht eine mehrlagige metallische Zylinderkopfdichtung hervor, welche auch der Abdichtung eines Kettenkastens dient. Die Dichtungsplatte dieser Zylinderkopfdichtung besitzt eine verhältnismäßig dicke Mittellage und zwei verhältnismäßig dünne Außenlagen, welche jeweils mit einer sogenannten Halbsicke versehen sind, die sich um die Kettenkastenöffnung als in sich geschlossene Sickenlinie herumerstreckt (im Gegensatz zu im Querschnitt ungefähr U-förmigen Vollsicken hat eine Halbsicke einen Querschnitt, welcher einer mehr oder minder flachgezogenen Stufe oder Z entspricht). Neben jeder der beiden Schmalseiten der Kettenkastenöffnung besitzt die Mittellage jeweils eine Aussparung in Form eines langgestreckten rechteckigen Fensters, welche parallel zu der benachbarten Schmalseite der Kettenkastenöffnung verläuft, sowie ein vorgefertigtes, strangförmiges elastomeres Dichtelement, welches mit Spiel in das betreffende Fenster eingelegt ist und beidseitig über die beiden Hauptoberflächen der Mittellage übersteht (und zwar schon bei noch nicht eingebauter, d. h. ungepreßter Zylinderkopfdichtung). Die eine der Außenlagen ist über den Dichtelementen geschlossen, d. h. durchgehend, während die andere Decklage ein großes, ungefähr rechteckiges Fenster besitzt, welches größer ist als die Kettenkastenöffnung und die beiden Dichtelemente freigibt, d. h. in einer Draufsicht auf die Zylinderkopfdichtung liegen die beiden Dichtelemente innerhalb dieses Fensters. Wie bei dieser bekannten Zylinderkopfdichtung die beiden Dichtelemente daran gehindert werden sollen, beim Handhaben der Dichtung aus dieser herauszufallen, läßt sich der EP-B-0 701 051 nicht entnehmen; außerdem vermag diese bekannte Zylinderkopfdichtung das eingangs geschilderte Problem dann nur zum Teil lösen, wenn in den gegen die Zylinderkopfdichtung anzupressenden Maschinenbauteil-Dichtflächen beidseits der Zylinderkopfdichtung Stoßstellen vorhanden sind, weil der Kettenkasten aus einem Kettenkasten-Oberteil und einem Kettenkasten-Unterteil zusammengesetzt ist; außerdem kann, wie sich aus dem folgenden noch ergeben wird, diese bekannte Dichtung auch dann zu Problemen führen, wenn auf der Seite der mit den Fenstern versehenen Außenlage ein Kettenkastenteil vorhanden ist, welches bei seiner Montage von der Seite her eingeschoben wird.

Schließlich sind aus der DE-A-195 34 962 und der EP-A-0 992 718 metallische Zylinderkopfdichtungen auch zur Abdichtung von Stoßstellen zwischen Motorblock und Kettenkasten mittels einer plastischen Dichtmasse bzw. eines elastischen Dichtelements bekannt geworden, welche beide auf dem Prinzip beruhen, daß auf der dem Zylinderkopf zugewandten Seite der Dichtung diese eine Auswölbung aufweist, um so auf der dem Motorblock bzw. Kettenkasten zugewandten Seite eine Einwölbung und damit einen das Dichtungsmaterial aufnehmenden Hohlraum zu schaffen, aus dem beim Einspannen der Zylinderkopfdichtung unter Abflachung der Auswölbung das Dichtungsmaterial nach unten in Richtung auf den Motorblock und Kettenkasten herausgepreßt wird. Während die Dichtung nach der EP-A-0 992 718 einlagig und somit der genannte Hohlraum nach unten insgesamt offen ist, beschreibt die DE-A-195 34 962 eine mehrlagige Dichtung, bei der die besagte Auswölbung in der dem Zylinderkopf zugewandten Decklage vorgesehen ist, die unter der Decklage angeordnete Zwischenlage unter der Auswölbung eine fensterartige Öffnung zur Bildung eines größeren Dichtmaterial-Reservoirs aufweist und zwei unter der Zwischenlage angeordnete Lagen mit Austrittsöffnungen für den Durchtritt des Dichtmaterials nach unten versehen sind. Auch diese beiden Zylinderkopfdichtungen können das geschilderte Problem dann nicht vollständig lösen, wenn in den gegen eine Zylinderkopfdichtung anzupressenden Maschinenbauteil-Dichtflächen beidseits der Dichtung Stoßstellen vorhanden sind, weil der Kettenkasten aus einem Kettenkasten-Oberteil und einem Kettenkasten-Unterteil zusammengesetzt ist.

Bei der Montage von Motoren mit einem aus einem Oberteil und einem Unterteil zusammengesetzten Kettenkasten ist schon versucht worden, das eingangs geschilderte Problem dadurch zu lösen, daß man die Zylinderkopfdichtung zu beiden Seiten der Kettenkastenöffnung jeweils mit einem verhältnismäßig kleinen, ovalen Loch versieht, welches durch alle Lagen der mehrlagigen metallischen Zylinderkopfdichtung hindurchgeht und in das im Zuge der Motormontage ein zunächst zähflüssiges Dichtmittel eingespritzt wird, welches bei erhöhten Temperaturen zu einem elastomeren Material ausgehärtet werden kann, also beispielsweise bei der ersten Inbetriebnahme des Motors. Es liegt aber auf der Hand, daß eine solche Vorgehensweise bei der Motormontage in einer Serienfertigung unbefriedigend ist, und zwar aus mehreren Gründen: Fahrzeughersteller tendieren heutzutage dazu, möglichst viele Arbeitsschritte auf ihre Zulieferer zu verlagern, und in der Serienfertigung ist es auch schwierig, zumindest aber zeitraubend, stets die für eine zuverlässige Abdichtung erforderliche Dichtmittelmenge in die besagten Löcher einzuspritzen.

Ferner besteht bezüglich der in Rede stehenden Flachdichtungen häufig noch ein weiteres Problem, welches sich anhand eines Motors mit einem mehrteiligen Kettenkasten gut illustrieren läßt: Ist beispielsweise das Kettenkasten-Oberteil parallel zur Ebene des durch die Zylinderkopfdichtung abzudichtenden Dichtspalts geführt, besteht bei der Montage des Kettenkasten-Oberteils das Risiko, daß ein über die Oberflächenkontur der Dichtungsplatte überstehendes elastomeres Dichtelement abgeschert wird.

Der Erfindung lag die Aufgabe zugrunde, eine Flachdichtung mit einer zumindest im wesentlichen von einer Metallblechlage gebildeten Dichtungsplatte zu schaffen, welche in einem Dichtungsplattenbereich, der der Abdichtung eines Dichtspaltbereichs zwischen gegen die Flachdichtung anpreßbaren Dichtflächen von Maschinenbauteilen dient, in dem die BauteilDichtflächen an der Flachdichtung zu einer räumlich unterschiedlichen Dichtflächenpressung führen, mit mindestens einem elastomeren Dichtelement versehen ist, um den Dichtspalt auch dort, wo sich in einer Maschinenbauteil-Dichtfläche gegebenenfalls eine Stufe ergeben kann, zuverlässig abzudichten; dabei soll die Flachdichtung so beschaffen sein, daß das Dichtelement schon vom Dichtungshersteller angebracht wird und beim Zusammenbau der die Maschinenbauteile und die Flachdichtung umfassenden Baugruppe nicht der Gefahr einer Beschädigung oder gar eines Abscherens ausgesetzt ist; insbesondere soll durch die Erfindung eine derartige Zylinderkopfdichtung für einen Motor mit Kettenkasten geschaffen werden, bei dem der Kettenkasten ein Kettenkasten-Oberteil und/oder ein Kettenkasten-Unterteil aufweist, das bzw. die an der Bildung des durch die Zylinderkopfdichtung abzudichtenden Dichtspalts mitwirkt bzw. mitwirken.

Diese Aufgabe läßt sich durch eine Flachdichtung nach Anspruch 1 lösen, d. h. durch eine Flachdichtung zur Abdichtung eines Dichtspalts zwischen gegen die Flachdichtung anpreßbaren Dichtflächen von Maschinenbauteilen, wobei die Flachdichtung eine von einer einzigen Metallblechlage gebildete Dichtungsplatte aufweist, welche in einem Dichtungsplattenbereich, der der Abdichtung eines Dichtspaltbereichs dient, in dem die Bauteildichtflächen an der Flachdichtung zu einer räumlich unterschiedlichen Dichtflächenpressung führen, mit mindestens einem elastomeren Dichtelement versehen ist, das an einer ersten Hauptoberfläche der Dichtungsplatte angeordnet ist, wobei bei nicht eingebauter, ungepreßter Flachdichtung die Oberflächenkontur der Metallblechlage an der zweiten Hauptoberfläche der Dichtungsplatte eine zur Dichtungsplattenebene parallele maximale Niveauebene definiert; dabei weist eine solche Flachdichtung erfindungsgemäß die Kombination folgender Merkmale auf:
(a) das Dichtelement ist als aus einem auf die erste Hauptoberfläche der Metallblechlage aufgebrachten und in situ aushärtbarem Material gebildetes Dichtelement gestaltet;
(b) die Metallblechlage ist im Bereich des Dichtelements mit einer Aussparung für den Durchtritt des aushärtbaren Dichtelementmaterials zur zweiten Hauptoberfläche der Dichtungsplatte versehen;
(c) das Material des Dichtelements ist mindestens bei Betriebstemperatur der Maschinenbauteile und der Flachdichtung zunächst derart plastisch verformbar, daß sich das Dichtelement bei eingebauter, gepreßter Flachdichtung durch die Aussparung der Metallblechlage hindurch bis zu der der zweiten Hauptoberfläche der Dichtungsplatte benachbarten Bauteildichtfläche erstreckt;
(d) die Dichtungsplatte und das Dichtelement sind so ausgebildet, daß sich das Dichtelement bei nicht eingebauter, ungepreßter Flachdichtung höchstens bis zu der maximalen Niveauebene erstreckt.

Bei einer Flachdichtung, bei der die die Hauptoberflächen der Dichtungsplatte bildende Metallblechlage im Bereich bzw. in der Nachbarschaft des Dichtelements (in einer Draufsicht auf die Flachdichtung) beispielsweise eine Sicke aufweist, welche in der vorstehend erwähnten zweiten Hauptoberfläche der Dichtungsplatte eine nach außen vorspringende Stufe oder Wulst bildet, ist die besagte maximale Niveauebene diejenige Ebene, welche parallel zur Ebene der Dichtungsplatte verläuft und auf der Sicke aufliegt; entsprechendes gilt für andere Erhebungen der Oberflächenkontur der genannten zweiten Hauptoberfläche der Dichtungsplatte im Bereich bzw. in der Nachbarschaft des Dichtelements. Bei einer erfindungsgemäßen Flachdichtung ist das Dichtelement demnach vor der Gefahr des Abscherens z. B. im Zuge der Montage des Kettenkasten-Oberteils geschützt, da das Dichtelement auf der einem Beschädigungsrisiko ausgesetzten Seite der Dichtung, ehe die Flachdichtung im Dichtspalt zwischen den Maschinenbauteilen eingespannt wird (z. B. durch Anziehen der Zylinderkopfschrauben), keinesfalls über die besagte maximale Niveauebene hinausragt und infolgedessen durch andere Dichtungsteile bzw. durch die Oberflächenkontur der Dichtung vor Beschädigungen durch ein von der Seite her aufgeschobenes Maschinenbauteil, wie ein Kettenkasten-Oberteil bzw. -Unterteil geschützt wird.

Ferner kann das Dichtelement schon vom Dichtungshersteller angebracht werden, so daß bei der Montage der Maschinenbauteile an der Flachdichtung selbst keinerlei weitere Arbeiten mehr durchgeführt werden müssen.

Wenn vorstehend davon die Rede war, daß das Material des Dichtelements mindestens bei Betriebstemperatur der Maschinenbauteile und der Flachdichtung zunächst plastisch verformbar sein soll, ist hierunter folgendes zu verstehen: Das zunächst aufgebrachte, noch nicht ausgehärtete Material, aus dem das Dichtelement gebildet wird, soll mindestens so lange zumindest auch und in gewissem Umfang plastisch verformbar sein, bis die Flachdichtung zwischen den gegeneinander abzudichtenden Maschinenbauteilen eingespannt wurde. Dabei kann das Material, aus dem das Dichtelement gebildet wird, schon vor dem Einbau der Dichtung teilweise vernetzt werden, um eine gewisse Formstabilität herbeizuführen, ohne daß dadurch das Dichtelement jegliche Plastizität bzw. jegliche Fähigkeit zum Fließen verliert. Das Material des Dichtelements kann dann z. B. bei Betriebstemperaturen (z. B. des Motors) oder geringeren, gegenüber Raumtemperatur erhöhten Temperaturen vollends so weit aushärten, daß es nur noch elastische, aber keine plastischen Eigenschaften mehr aufweist.

Das Grundprinzip der Erfindung ermöglicht es, die Dichtungsplatte und das Dichtelement so auszubilden, daß ein bei eingebauter Dichtung im Sinne einer Abdichtung wirksamer Abdichtbereich des Dichtelements erst durch Einspannen der Flachdichtung zwischen den Maschinenbauteilen durch die Aussparung der Metallblechlage hindurchgepreßt und gegen diejenige Bauteildichtfläche angepreßt wird, welche der zweiten Hauptoberfläche der Dichtungsplatte benachbart ist. Dabei kann das Dichtelement bei noch nicht eingebauter, d. h. ungepreßter Dichtung entweder noch gar nicht in die Aussparung der Metallblechlage hineinragen oder zwar in diese Aussparung eingreifen oder sogar durch diese Aussparung hindurchgreifen, jedoch zumindest nicht so weit aus dieser Aussparung herausragen, daß der besagte Abdichtbereich des Dichtelements über die vorstehend definierte maximale Niveauebene der ungepreßten Dichtung hinausragt.

Die erfindungsgemäße Flachdichtung eignet sich also insbesondere für eine Einbausituation, bei der die zu beiden Seiten der Flachdichtung liegenden Maschinenbauteil-Dichtflächen beide Stufen oder ähnliche, problematisch abzudichtende Unebenheiten aufweisen. Die Aussparung der Metallblechlage kann auch der besseren Verankerung des Dichtelements an der Metallblechlage dienen.

Die erfindungsgemäße Dichtung eignet sich ferner für Einbausituationen, bei denen nur die der ersten Hauptoberfläche der Dichtungsplatte benachbarte Bauteildichtfläche eine Stufe oder eine ähnliche Unebenheit aufweist: Erstreckt sich das Material des Dichtelements bei noch nicht eingebauter Dichtung noch nicht in die Aussparung der Metallblechlage oder füllt diese Aussparung zumindest noch nicht vollständig aus, so wie dies bei bevorzugten Ausführungsformen der Erfindung der Fall sein soll, bildet die Aussparung einen Ausweichraum für das Dichtelementmaterial während des Vorgangs des Einspannens der Dichtung zwischen den Bauteildichtflächen (und/oder im Betrieb der Maschine), was einer übermäßigen Verquetschung des Dichtelements, welche zu Undichtigkeiten führen kann, entgegenwirkt.

Wie sich aus dem Vorstehenden ergibt, läßt sich mit einer erfindungsgemäßen Flachdichtung das geschilderte Abdichtproblem bei Motoren mit mehrteiligem Kettenkasten lösen, und zwar mit einer Dichtung gemäß Anspruch 4, bei der die Aussparung der Metallblechlage zur Überbrückung der Stoßstelle zwischen einem ersten separaten Kettenkastenteil und dem dem letzteren benachbarten Motorbauteil ausgebildet und angeordnet ist (bei dem ersten Kettenkastenteil kann es sich um das Kettenkasten-Oberteil oder das Kettenkasten-Unterteil handeln, wobei es sich dann bei dem benachbarten Motorbauteil um den Zylinderkopf bzw. den Motorblock handelt). Da das geschilderte Stoßstellenproblem häufig beidseits der Zylinderkopfdichtung besteht, wird eine erfindungsgemäße Zylinderkopfdichtung dann so ausgebildet, daß die vorstehend erwähnte Aussparung der Metallblechlage zur Überbrückung der Stoßstelle zwischen dem zweiten separaten Kettenkastenteil und dem dem letzteren benachbarten Motorbauteil ausgebildet und angeordnet ist.

Bei bevorzugten Ausführungsformen einer erfindungsgemäßen Zylinderkopfdichtung für Motoren mit Kettenkasten ist die Metallblechlage im Bereich bzw. in unmittelbarer Nachbarschaft ihrer Aussparung mit einer Sicke (Vollsicke, vorzugsweise jedoch Halbsicke) versehen, welche an der vorstehend definierten zweiten Hauptoberfläche der Dichtungsplatte einen die Aussparung der Metallblechlage überragenden Vorsprung bildet. Mit einer solchen, natürlich elastisch verformbaren Sicke läßt sich um die Kettenkastenöffnung herum überall dort hinreichend zuverlässig abdichten, wo die Motorbauteil-Dichtflächen keine Stufen aufweisen; außerdem oder alternativ kann die Sicke das Dichtelement bzw. die Dichtelemente gegen Beschädigungen schützen.

Im folgenden wird die Erfindung anhand einer bevorzugten Ausführungsform einer erfindungsgemäßen Zylinderkopfdichtung noch näher erläutert, welche in den beigefügten Zeichnungen dargestellt ist; in diesen zeigen:
- Figur 1: eine Draufsicht auf einen Teil der Zylinderkopfdichtung, welcher zwei Brennraum-Durchgangsöffnungen sowie eine Kettenkastenöffnung der Dichtung umfaßt;
- Figur 2: einen Schnitt nach der Linie 2-2, in Figur 1;
- Figur 3: den in Figur 1 angedeuteten Ausschnitt "A" in größerem Maßstab, und
- Figur 4: einen Schnitt nach der Linie 4-4 in Figur 3, wobei in Figur 4 auch Teile eines Motorblocks, eines Zylinderkopfs, eines Kettenkasten-Oberteils und eines KettenkastenUnterteils eines zu der Dichtung gehörenden Motors angedeutet wurden.

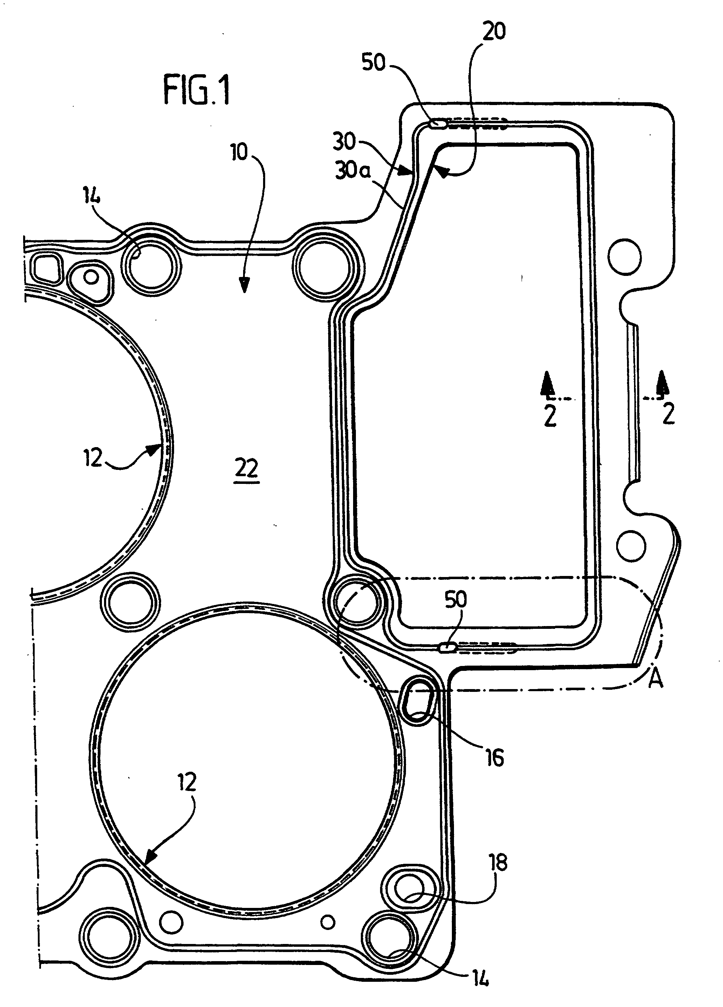

Die in Figur 1 teilweise dargestellte Zylinderkopfdichtung hat eine als Ganzes mit 10 bezeichnete Dichtungsplatte, in der eine Vielzahl von durch die Dichtungsplatte hindurchgehenden Öffnungen ausgebildet sind, so z. B. Brennraumöffnungen 12, Schraubenlöcher 14 für den Durchtritt von Zylinderkopfschrauben, und Wasser- bzw. Öllöcher 16 bzw. 18. Außerdem beinhaltet die Zylinderkopfdichtung eine Kettenkastenöffnung 20, um die herum Dichtflächen eines Kettenkasten-Oberteils und eines angrenzenden Zylinderkopfs sowie eines Kettenkasten-Unterteils und eines angrenzenden Motorblocks durch die Zylinderkopfdichtung gegeneinander abzudichten sind.

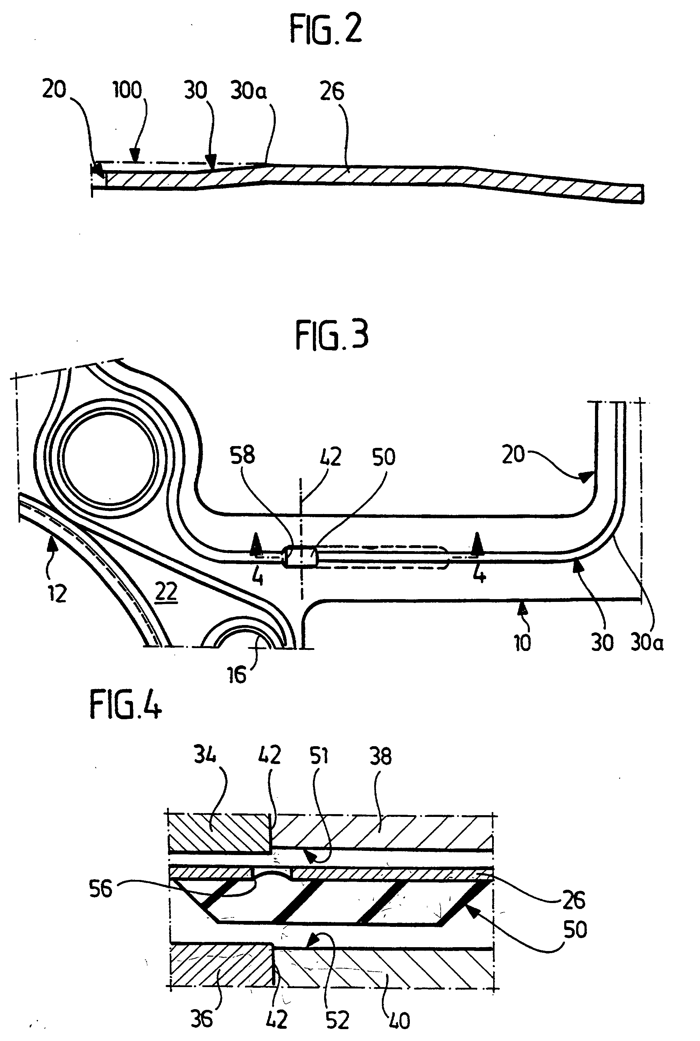

Wie die Figur 2 erkennen läßt, ist die Dichtungsplatte 10 einlagig und wird im wesentlichen von einer mit Sicken versehenen Metallblechlage 26 aus einem elastische Eigenschaften aufweisenden Stahlblech gebildet.

Um die Kettenkastenöffnung 20 herum verläuft in der Metallblechlage 26 eine Halbsicke 30 (siehe auch Figur 2), welche eine in sich geschlossene Sickenlinie bildet und deren Kamm mit 30a bezeichnet wurde.

In Figur 4 sind die für die vorliegende Erfindung relevanten Motorbauteile angedeutet, wenn auch nur bereichsweise, nämlich ein Zylinderkopf 34, ein Motorblock 36, ein Kettenkasten-Oberteil 38 und ein Kettenkasten-Unterteil 40; die Stoßstellen, an denen der Zylinderkopf und das Kettenkasten-Oberteil bzw. der Motorblock und das Kettenkasten-Unterteil aneinandergrenzen (stumpf gegeneinander stoßen), wurden beide mit 42 bezeichnet, da bei der dargestellten Ausführungsform die beiden Stoß- oder Trennstellen exakt übereinanderliegen, weshalb sie in Figur 3 auch nur durch eine einzige strichpunktierte Linie angedeutet wurden.

Während im praktisch nur schwer realisierbaren Idealfall Zylinderkopf und Kettenkasten-Oberteil bzw. Motorblock und Kettenkasten-Unterteil durchgehende, ebene Dichtflächen bilden, zwischen denen die Zylinderkopfdichtung eingespannt wird, führen Fertigungs- und Montagetoleranzen oft dazu, daß die in Figur 4 mit 51 bzw. 52 bezeichneten Dichtflächen an den Stoßstellen 42 eine kleine Stufe bilden. Dabei ist die Stufe in der Dichtfläche 52 in der Regel deutlich größer bzw. höher als eine in der Dichtfläche 51 gegebenenfalls vorhandene Stufe, da die Montage des Kettenkasten-Oberteils 38 oft auf Paßstiften und damit sehr genau erfolgt. So kann die Dichtfläche 52 im Bereich des Kettenkasten-Unterteils 40 um 0,2 ± 0,2 mm, d. h. bis zu 0,4 mm, tiefer liegen als im Bereich des Motorblocks 36.

Gegenstand der vorliegenden Erfindung sind nun zwei im wesentlichen strang- oder raupenförmige Dichtelemente 50, welche zu beiden Seiten der Kettenkastenöffnung 20 angeordnet sind, und zwar neben den Schmalseiten der Kettenkastenöffnung, und die - in einer Draufsicht auf die Dichtung - im Bereich der Halbsicke 30 bzw. des Sickenkamms 30a liegen. Erfindungsgemäß werden zur Erzeugung der Dichtelemente 50 auf die Motorblock-seitige Oberfläche der Metallblechlage 26 zwei in ihrer Länge der Länge der Dichtelemente 50 entsprechende Raupen aus einem zunächst pastösen Dichtungsmaterial aufgetragen, welches sich insbesondere durch Erwärmen so verfestigen läßt, daß es zunächst außer elastischen auch noch plastische Eigenschaften und sodann nur noch elastische Eigenschaften aufweist. Wie sich der Figur 4 in Verbindung mit den Figuren 1 und 3 entnehmen läßt, weist die Metallblechlage 26 über jedem Dichtelement 50 eine fensterartige Aussparung 56 auf, deren Gestalt einem Langloch bzw. einem Rechteck entspricht, welches sich in Längsrichtung des benachbarten Dichtelements 50 erstreckt und vorzugsweise deutlich kürzer ist als das Dichtelement 50. Bei einer bevorzugten Ausführungsform hat die Aussparung 56 die Abmessungen 3 x 5 mm.

Die Dichtelemente 50 sind erfindungsgemäß um ein Vielfaches höher (gemäß Figur 4 vertikale Abmessung) als die Metallblechlage 26 dick ist - bei einer bevorzugten Ausführungsform beträgt die Höhe der Dichtelemente 50 0,7 bis 0,9 mm.

Beim Auftragen des später die Dichtelemente 50 bildenden Dichtungsmaterials auf die Metallblechlage 26 kann das Dichtungsmaterial in die Aussparung 56 eintreten, so wie dies in Figur 4 angedeutet wurde. Erfindungsgemäß tritt das Material der Dichtelemente 50 erst beim Einbauen der Dichtung und beim Einspannen der Dichtung zwischen den Maschinenbauteil-Dichtflächen durch die Aussparung 56 hindurch, so daß es dann über beide Hauptoberflächen der Dichtungsplatte 10 übersteht und gegen die Dichtflächen 51 und 52 angepreßt wird, und zwar gerade im Bereich der Stoßstellen 42. Dabei bildet das Dichtungsmaterial auf der gemäß Fig. 4 unteren Seite der Dichtungsplatte eine längliche, elastomere Rippe, welche gegen die Dichtfläche 52 angepreßt wird, während dank der geringen Unebenheiten der Dichtfläche 51 auf der Oberseite (gemäß Figur 4) der Dichtung ein kurzer, aus der Aussparung 56 austretender elastomerer Bereich der Dichtelemente 50 für eine zuverlässige Abdichtung ausreichend ist.

Beim Hersteller der Flachdichtung ist es ohne weiteres möglich, zur Herstellung der Dichtelemente 50 Dichtungsmaterial-Raupen auf die Metallblechlage 26 aufzutragen, und zwar hinsichtlich der Länge, der Breite und des Volumens dieser Raupen derart gesteuert, daß sich exakt die gewünschten Dichtelemente 50 ergeben.

Zur Vervollständigung sei noch erwähnt, daß die vorstehend definierte maximale Niveauebene in die Figur 2 als strichpunktierte Linie 100 eingezeichnet wurde; bei der dargestellten Ausführungsform verläuft diese Niveauebene parallel zur Ebene der Dichtungsplatte 10 als Tangentialebene an den Sickenkamm 30a der Sicke 30.

## Patentansprüche

1. Flachdichtung zur Abdichtung eines Dichtspalts zwischen gegen die Flachdichtung anpreßbaren Dichtflächen (51, 52) von Maschinenbauteilen (34, 36, 38, 40), wobei die Flachdichtung eine von einer einzigen Metallblechlage (26) gebildete Dichtungsplatte (10) aufweist, welche in einem Dichtungsplattenbereich, der der Abdichtung eines Dichtspaltbereichs dient, in dem die Bauteildichtflächen an der Flachdichtung zu einer räumlich unterschiedlichen Dichtflächenpressung führen, mit mindestens einem elastomeren Dichtelement (50) versehen ist, das an einer ersten Hauptoberfläche der Dichtungsplatte (10) angeordnet ist, wobei bei nicht eingebauter, ungepreßter Flachdichtung die Oberflächenkontur der Metallblechlage (26) an der zweiten Hauptoberfläche der Dichtungsplatte (10) eine zur Dichtungsplattenebene parallele maximale Niveauebene (100) definiert, **gekennzeichnet durch** die Kombination folgender Merkmale:
(a) das Dichtelement (50) ist als aus einem auf die erste Hauptoberfläche der Dichtungsplatte (10) aufgebrachten und in situ aushärtbarem Material gebildetes Dichtelement gestaltet;
(b) die Metallblechlage (26) ist im Bereich des Dichtelements (50) mit einer Aussparung (56) für den Durchtritt des aushärtbaren Dichtelementmaterials zur zweiten Hauptoberfläche der Dichtungsplatte (10) versehen;
(c) das Material des Dichtelements (50) ist mindestens bei Betriebstemperatur der Maschinenbauteile und der Flachdichtung zunächst derart plastisch verformbar, daß sich das Dichtelement bei eingebauter, gepreßter Flachdichtung **durch** die Aussparung (56) der Metallblechlage (26) hindurch bis zu der der zweiten Hauptoberfläche der Dichtungsplatte (10) benachbarten Bauteildichtfläche (51) erstreckt;
(d) die Dichtungsplatte (10) und das Dichtelement (50) sind so ausgebildet, daß sich das Dichtelement bei nicht eingebauter, ungepreßter Flachdichtung höchstens bis zu der maximalen Niveauebene (100) erstreckt.

2. Flachdichtung nach Anspruch 1, **dadurch gekennzeichnet, daß** das Material des Dichtelements (50) unter gegenüber Raumtemperatur erhöhten Temperaturen aushärtbar ist.

3. Flachdichtung nach Anspruch 2, **dadurch gekennzeichnet, daß** bei noch nicht eingebauter Flachdichtung das Material des Dichtelements (50) noch nicht ausgehärtet ist.

4. Flachdichtung nach einem oder mehreren der vorstehenden Ansprüche, wobei die Maschinenbauteile einen Zylinderkopf (34), einen Motorblock (36), ein dem Zylinderkopf benachbartes Kettenkasten-Oberteil (38) und/oder ein dem Motorblock benachbartes Kettenkasten-Unterteil (40) sind, die eine Bauteildichtfläche (51) von dem Zylinderkopf sowie gegebenenfalls dem Kettenkasten-Oberteil, die andere Bauteildichtfläche (52) von dem Motorblock sowie gegebenenfalls dem Kettenkasten-Unterteil gebildet wird und die Flachdichtung als Zylinderkopfdichtung mit einem Kettenkasten-Abdichtbereich ausgebildet ist, **dadurch gekennzeichnet, daß** das Dichtelement (50) auf der ersten Hauptoberfläche der Metallblechlage (26) zur Überbrückung der Stoßstelle (42) zwischen einem ersten Kettenkastenteil und dem dem letzteren benachbarten Motorbauteil ausgebildet und angeordnet ist.

5. Flachdichtung nach Anspruch 4, **dadurch gekennzeichnet, daß** die Aussparung (56) zur Überbrückung der Stoßstelle (42) zwischen dem zweiten Kettenkastenteil und dem dem letzteren benachbarten Motorbauteil ausgebildet und angeordnet ist.

6. Flachdichtung nach einem oder mehreren der vorstehenden Ansprüche, **dadurch gekennzeichnet, daß** das Dichtelement (50) als auf die Metallblechlage (26) aufgetragene längliche Raupe aus einem elastomeren Material ausgebildet und die Aussparung (56) als unter dieser Raupe liegendes, insbesondere längliches Fenster gestaltet ist.

7. Flachdichtung nach einem der vorstehenden Ansprüche, **dadurch gekennzeichnet, daß** die Aussparung (56) in Längsrichtung der Raupe kürzer als die Raupe ist.

8. Flachdichtung nach einem oder mehreren der vorstehenden Ansprüche, **dadurch gekennzeichnet, daß** die Metallblechlage (26) im Bereich ihrer Aussparung (56) mit einer Sicke versehen ist, welche an der zweiten Hauptoberfläche der Dichtungsplatte (10) einen die Aussparung (56) überragenden Vorsprung bildet.

9. Flachdichtung nach Anspruch 8, **dadurch gekennzeichnet, daß** die Sicke als Halbsicke ausgebildet ist.

10. Flachdichtung nach Anspruch 8 oder 9, **dadurch gekennzeichnet, daß** die Sicke eine um eine Kettenkastenöffnung (20) der Flachdichtung herum verlaufende, in sich geschlossene Sickenlinie bildet.

11. Flachdichtung nach einem oder mehreren der Ansprüche 8 bis 10, **dadurch gekennzeichnet, daß** - in einer Draufsicht auf die Flachdichtung - der Kamm der Sicke über dem Dichtelement (50) liegt.

## Claims

1. Flat gasket for sealing a sealing gap between sealing surfaces (51, 52) of machine components (34, 36, 38, 40), which sealing surfaces are pressable against the flat gasket, the flat gasket comprising a gasket plate (10) formed by a single sheet metal layer (26), the gasket plate being provided with at least one elastomeric sealing element (50) in a gasket plate area serving to seal a sealing gap area in which the component sealing surfaces lead to a locally varying sealing surface pressure at the flat gasket, the sealing element being arranged on a first main surface of the gasket plate (10), and the surface contour of the sheet metal layer (26) defining at the second main surface of the gasket plate (10) a plane (100) of the maximum level parallel to the plane of the gasket plate in the unmounted, unpressed state of the flat gasket, **characterized by** the combination of the following features:
(a) the sealing element (50) is in the form of a sealing element formed from a material which is applied to the first main surface of the gasket plate (10) and is curable in situ;
(b) the sheet metal layer (26) is provided in the area of the sealing element (50) with a cutout (56) for passage of the curable sealing element material to the second main surface of the gasket plate (10);
(c) the material of the sealing element (50) is initially capable of undergoing plastic deformation at least at operating temperature of the machine components and the flat gasket such that in the mounted, pressed state of the flat gasket, the sealing element extends through the cutout (56) of the sheet metal layer (26) as far as the component sealing surface (51) adjacent to the second main surface of the gasket plate (10);
(d) the gasket plate (10) and the sealing element (50) are so designed that in the unmounted, unpressed state of the flat gasket, the sealing element extends at the most as far as the plane (100) of the maximum level.

2. Flat gasket as defined in claim 1, **characterized in that** the material of the sealing element (50) is curable at elevated temperatures with respect to room temperature.

3. Flat gasket as defined in claim 2, **characterized in that** the material of the sealing element (50) is not yet cured so long as the flat gasket is not yet mounted.

4. Flat gasket as defined in any one or several of the preceding claims, the machine components being a cylinder head (34), an engine block (36), a chain case top part (38) adjacent to the cylinder head and/or a chain case bottom part (40) adjacent to the engine block, one component sealing surface (51) being formed by the cylinder head and possibly the chain case top part, and the other component sealing surface (52) by the engine block and possibly the chain case bottom part, and the flat gasket being designed as a cylinder head gasket with a chain case sealing area, **characterized in that** the sealing element (50) is designed and arranged on the first main surface of the sheet metal layer (26) so as to bridge the joint (42) between a first chain case part and the engine component adjacent thereto.

5. Flat gasket as defined in claim 4, **characterized in that** the cutout (56) is designed and arranged so as to bridge the joint (42) between the second chain case part and the engine component adjacent thereto.

6. Flat gasket as defined in any one or several of the preceding claims, **characterized in that** the sealing element (50) is in the form of an elongate strand of elastomeric material applied to the sheet metal layer (26), and the cutout (56) is designed as an, in particular, elongate window lying under this strand.

7. Flat gasket as defined in any one of the preceding claims, **characterized in that** the cutout (56) is shorter than the strand in the longitudinal direction of the strand.

8. Flat gasket as defined in any one or several of the preceding claims, **characterized in that** the sheet metal layer (26) is provided in the area of its cutout (56) with a bead which forms on the second main surface of the gasket plate (10) a projection rising above the cutout (56).

9. Flat gasket as defined in claim 8, **characterized in that** the bead is in the form of a half bead.

10. Flat gasket as defined in claim 8 or 9, **characterized in that** the bead forms a bead line closed within itself, which extends around a chain case opening (20) of the flat gasket.

11. Flat gasket as defined in any one or several of claims 8 to 10, **characterized in that** - in a plan view of the flat gasket - the crest of the bead lies over the sealing element (50).

## Revendications

1. Joint d'étanchéité plat pour l'étanchéité d'un interstice d'étanchéité entre les surfaces d'étanchéité (51, 52) de composants de moteur (36, 36, 38, 40) pouvant être pressées contre le joint d'êtanchéité plat, le joint d'étanchéité plat présentant exactement une plaque d'étanchéité (10) contenant seulement une couche de tôle métallique (26) qui, dans une zone de la plaque d'étanchéité qui sert à l'étanchéité d'une zone de l'interstice d'étanchéité dans laquelle les surfaces d'étanchéité des composants conduisent sur le joint d'étanchéité plat à une compression des surfaces d'étanchéité différente dans l'espace, est munie d'au moins un élément d'étanchéité élastomère (50) qui est placé sur une première surface principale de la plaque d'étanchéité (10), moyennant quoi, lorsque le joint plat d'étanchéité n'est ni inséré, ni pressé, le contour de la surface de la couche de tôle métallique (26) définit sur la seconde surface principale de la plaque d'étanchéité (10) un plan de niveau (100) maximal parallèle au plan de la plaque d'étanchéité, **caractérisé par** la combinaison des caractéristiques suivantes :
(a) l'élément d'étanchéité (50) est configuré comme un élément d'étanchéité formé d'une matière appliquée sur la première surface principale de la plaque d'étanchéité (10) et durcissable in situ ;
(b) la couche de tôle métallique (26) est munie, dans la zone de l'élément d'étanchéité (50), d'un évidement (56) pour le passage de la matière de l'élément d'étanchéité durcissable jusqu'à la seconde surface principale de la plaque d'étanchéité (10);
(c) la matière de l'élément d'étanchéité (50) est déformable plastiquement au moins à la température de fonctionnement des composants de moteur et du joint d'étanchéité plat d'abord de telle manière que, lorsque le joint d'étanchéité plat est monté et pressé, l'élément d'étanchéité s'étend à travers l'évidement (56) de la couche de tôle métallique (26) jusqu'à la surface d'étanchéité de composant (51) adjacente à la seconde surface principale de la plaque d'étanchéité (10) ;
(d) la plaque d'étanchéité (10) et l'élément d'étanchéité (50) sont configurés de telle manière que, lorsque le joint d'étanchéité plat n'est ni monté ni pressé, l'élément d'étanchéité s'étend au maximum jusqu'au plan de niveau maximal (100).

2. Joint d'étanchéité plat selon la revendication 1, **caractérisé en ce que** la matière de l'élément d'étanchéité (50) est durcissable en dessous de températures élevées par rapport à la température ambiante.

3. Joint d'étanchéité plat selon la revendication 2, **caractérisé en ce que**, lorsque le joint d'étanchéité plat n'est pas encore monté, la matière de l'élément d'étanchéité (50) n'est pas encore durcie.

4. Joint d'étanchéité plat selon une ou plusieurs des revendications précédentes, les composants de moteur étant une culasse de cylindre (34), un bloc moteur (36), une partie supérieure de carter de chaînes (38) adjacente à la culasse de cylindre et/ou une partie inférieure de carter de chaînes (40) adjacente au bloc moteur, la surface d'étanchéité de composant de moteur (51) étant formée par la culasse de cylindre et, éventuellement, par la partie supérieure de carter de chaînes, l'autre surface d'étanchéité de composant de moteur (52) étant formée par le bloc moteur et, éventuellement, par la partie inférieure de carter de chaînes, et le joint d'étanchéité plat étant configuré comme un joint d'étanchéité de culasse de cylindre avec une zone d'étanchéité de carter de chaînes, **caractérisé en ce que** l'élément d'étanchéité (50) est configuré et disposé sur la première surface principale de la couche de tôle métallique (26) pour le pontage du point d'impact (42) entre une première partie de carter de chaînes et le composant du moteur adjacent à la dernière.

5. Joint d'étanchéité plat selon la revendication 4, **caractérisé en ce que** l'évidement (56) pour le pontage du point d'impact (42) est configuré et disposé entre la deuxième partie de carter de chaînes et le composant du moteur adjacent à la dernière.

6. Joint d'étanchéité plat selon une ou plusieurs des revendications précédentes, **caractérisé en ce que** l'élément d'étanchéité (50) est configuré comme un cordon allongé de matière élastomère appliqué sur la couche de tôle métallique (26) et l'évidement (56) est formé comme une fenêtre, en particulier allongée, se trouvant sous ce cordon.

7. Joint d'étanchéité plat selon une ou plusieurs des revendications précédentes, **caractérisé en ce que** l'évidement (56) dans la direction longitudinale du cordon est plus court que le cordon.

8. Joint d'étanchéité plat selon une ou plusieurs des revendications précédentes, **caractérisé en ce que**, dans la zone de son évidement (56), la couche de tôle métallique (26) est munie d'une moulure qui forme sur la seconde surface principale de la plaque d'étanchéité (10) une partie en saillie débordant au dessus de l'évidement (56).

9. Joint d'étanchéité plat selon la revendication 8, **caractérisé en ce que** la moulure est configurée comme une demi-moulure.

10. Joint d'étanchéité plat selon la revendication 8 ou 9, **caractérisé en ce que** la moulure forme une ligne de moulure fermée s'étendant autour d'une ouverture de carter de chaînes (20) du joint d'étanchéité plat.

11. Joint d'étanchéité plat selon une ou plusieurs des revendications 8 à 10, **caractérisé en ce que** - suivant une vue de dessus du joint d'étanchéité plat - la crête de la moulure est posée sur l'élément d'étanchéité (50).
